# FASCICULE DE BREVET EUROPEEN

(11) **EP 2 099 142 B1**
(45) Date de publication et mention de la délivrance du brevet: **21.11.2012**
(21) Numéro de dépôt: 09305186.0
(22) Date de dépôt: 02.03.2009
(51) Int. Cl.: H04B 7/204, H01Q 3/26

(54) **Procédé d'établissement de liaisons radiofréquences via un satellite multifaisceaux**
Verfahren zur Herstellung von Funkverbindungen über einen Mehrfachstrahl-Satelliten
Method for establishing radio links by means of a multi-beam satellite

(30) Priorité: 05.03.2008 FR 0851432
(43) Date de publication de la demande: 09.09.2009
(73) Titulaire: Eutelsat SA, 75015 Paris (FR)
(72) Inventeur: Dutronc, Jacques, 78000 Versailles (FR); Fenech, Hector, 92130 Issy Les Moulineaux (FR); Lance, Emmanuel, 92110 Clichy (FR)
(74) Mandataire: Lebkiri, Alexandre

(56) Documents cités:
- EP-A- 0 812 072
- EP-A- 1 168 672
- FR-A- 2 762 937
- GB-A- 2 303 764
- US-A- 5 083 131

## Description

La présente invention concerne un procédé d'établissement de liaisons radiofréquences via un satellite de télécommunication à plusieurs faisceaux, dit satellite multifaisceaux ou multispots, entre au moins une station terrestre et une zone de services composée d'une pluralité de zones de couverture élémentaires, dites cellules, chaque cellule comportant une pluralité de terminaux terrestres. Ce type de satellite permet l'utilisation de plusieurs faisceaux d'antennes à bord du satellite pour couvrir des zones géographiques contiguës ou cellules, au lieu d'un seul faisceau large.

De tels satellites multifaisceaux permettent d'établir plusieurs liaisons radiofréquences occupant une même bande de fréquence sur des faisceaux différents.

Dans le cas de système de télécommunication satellitaire large bande (« broadband » en anglais) à haut débit, le satellite est utilisé de façon bidirectionnelle, c'est-à-dire à la fois pour :
- relayer des données émises par une station terrestre vers une pluralité de terminaux terrestres : cette première liaison de type point à multipoints constitue la voie aller (« forward link » en anglais) ;
- relayer vers la station terrestre les données émises par les terminaux terrestres : cette deuxième liaison, de type multipoints à point, constitue la voie retour (« return link » en anglais).

On notera qu'un service de radiodiffusion par satellite peut être considéré comme équivalent à la voie aller d'un système bidirectionnel tel que décrit ci-dessus.

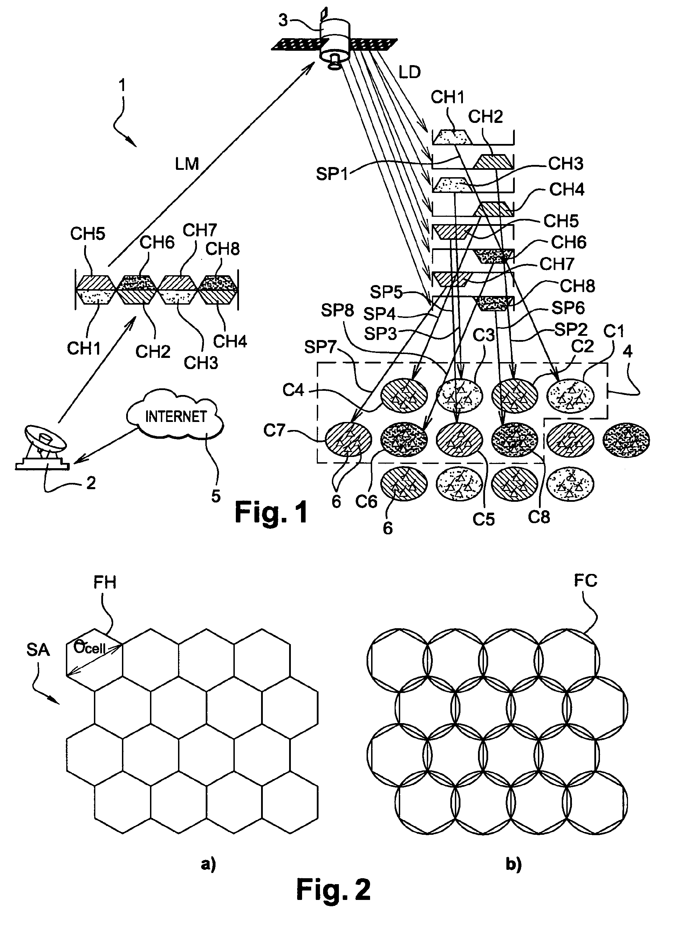

Un exemple de voie aller dans une configuration multifaisceaux est illustré en figure 1.

Des signaux sont envoyés vers un satellite multifaisceaux 3 sur une liaison montante LM par une station terrestre 2 telle qu'une passerelle de communication (« gateway » en anglais) reliée à une dorsale Internet 5. Ces signaux sont ensuite traités au niveau du satellite 3 puis retransmis sur une liaison descendante LD sous la forme d'une pluralité de faisceaux ou spots formant des zones de couvertures élémentaires ou cellules C1 à C8 dans lesquels sont situés des terminaux terrestres 6. Chaque cellule C1 à C8 est associée à un faisceau SP1 à SP8. On notera que, dans le cas de la configuration 1, les huit cellules C1 à C8 associés respectivement aux huit faisceaux SP1 à SP8 forment un groupe de cellules servies par la même station terrestre 2. La voie retour des terminaux terrestres 6 vers la station terrestre 2 fonctionne de manière identique avec une direction de communication inverse.

La coordination des fréquences entre opérateurs se fait dans le cadre d'une règlementation édictée par l'Union Internationale des Télécommunications (IUT) : ainsi, à titre d'exemple, la bande Ka pour la région 1 (Europe, Afrique, Moyen-Orient) est définie dans le tableau 1 ci-dessous :

**Tableau 1.**

| | | |
|---|---|---|
| Voie aller | Liaison montante (de la station terrestre) | 27.5 GHz à 29.5 GHz |
| | Liaison descendante (vers les terminaux terrestres) | 19.7 GHz à 20.2 GHz |
| Voie retour | Liaison montante (des terminaux terrestres) | 29.5 GHz à 30.0 GHz |
| | Liaison descendante (vers la station terrestre) | 17.7 GHz à 19.7 GHz |

D'autres bandes telles que la bande Ku peuvent également être utilisées.

Étant donné que le gain d'une antenne est inversement proportionnel à l'ouverture du faisceau, il est nécessaire d'utiliser des antennes multifaisceaux pour couvrir une zone étendue avec un gain homogène et élevé. Plus le nombre de faisceaux sera grand, plus petite sera l'ouverture de chaque faisceau. Ainsi, le gain sur chaque faisceau et donc le gain sur la zone de service à couvrir sera augmenté. Comme nous l'avons mentionné plus haut, une zone de service à couvrir est formée par une pluralité de cellules contiguës (zones de couvertures élémentaires), un faisceau étant associé à chaque cellule. Une zone de couverture multifaisceaux homogène SA est représentée en figure 2a), chaque cellule étant représentée par un hexagone FH de sorte que la zone de couverture est composée d'une pluralité d'hexagones FH dans laquelle θ*_{cell}* est la dimension externe de la cellule exprimée par l'angle du satellite associé à la couverture. Toutefois, le faisceau d'antenne associé à chaque cellule n'est pas capable de produire une forme hexagonale, une bonne approximation consistant à considérer une pluralité de faisceaux circulaires FC tels que représentés en figure 2b). L'association d'un faisceau avec une cellule se fait en prenant en compte les meilleures performances du satellite pour ledit faisceau, notamment en termes de PIRE (Puissance Isotrope Rayonnée Equivalente) et de facteur de mérite G/T (rapport gain sur température de bruit) : une cellule est déterminée comme la partie de la zone de service associée au faisceau offrant le gain le plus élevé sur cette zone parmi tous les faisceaux du satellite.

La configuration 1 telle que représentée en figure 1 utilise une technique dite de réutilisation des fréquences : cette technique permet d'utiliser une même plage de fréquences plusieurs fois dans le même système satellitaire afin d'accroître la capacité totale du système sans augmenter la bande passante attribuée.

On connaît des schémas de réutilisation de fréquences, dits schémas de couleur, faisant correspondre une couleur à chacun des faisceaux du satellite. Ces schémas de couleur sont utilisés pour décrire l'attribution d'une pluralité de bandes de fréquences aux faisceaux du satellite en vue de transmissions radiofréquences à réaliser dans chacun de ces faisceaux. Dans ces schémas, chaque couleur correspond à une de ces bandes de fréquences.

Ces satellites multifaisceaux permettent par ailleurs d'émettre (et de recevoir) des transmissions polarisées : la polarisation peut être linéaire (dans ce cas les deux sens de polarisation sont respectivement horizontal et vertical) ou circulaire (dans ce cas les deux sens de polarisation sont respectivement circulaire gauche ou circulaire droit). On notera que dans l'exemple de la figure 1, la liaison montante partant de la station 2 utilise deux polarisations avec quatre canaux pour chaque polarisation, respectivement Ch1 à Ch4 pour la première polarisation et Ch5 à Ch8 pour la deuxième polarisation : l'utilisation de deux polarisations permet de réduire le nombre total de stations terrestres. Les huit canaux Ch1 à Ch8, après traitement par la charge utile du satellite 3 formeront les huit faisceaux SP1 à SP8 (un canal étant associé à un faisceau dans cet exemple).

Selon un schéma à quatre couleurs (rouge, jaune, bleu, vert) avec un spectre de fréquence de 500 MHz pour chaque polarisation, les transmissions étant polarisées dans l'un des deux sens de polarisation circulaire droit ou circulaire gauche, chaque couleur est associée à une bande de 250 MHz et un sens de polarisation.

Nous prendrons dans toute la suite de la description la convention suivante :
- la couleur rouge est représentée par des traits hachurés vers la droite ;
- la couleur jaune est représentée par des points denses ;
- la couleur bleue est représentée par des traits hachurés vers la gauche ;
- la couleur verte est représentée par des points dispersés.

Une couleur est ainsi associée à chaque faisceau du satellite (et donc une cellule) de sorte que les faisceaux d'une même « couleur » soient non adjacents : les cellules contiguës correspondent donc à des couleurs différentes.

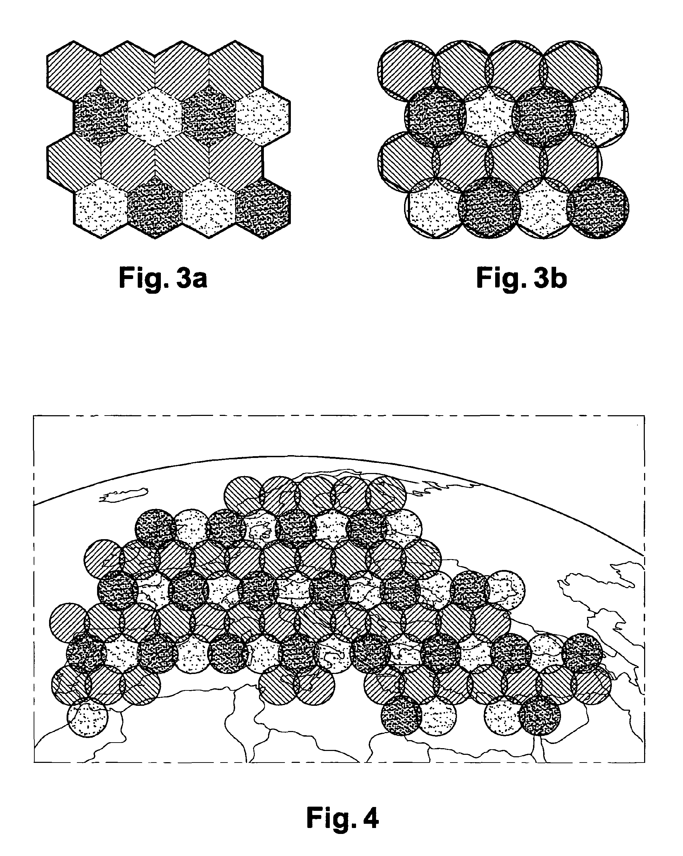

Les figures 3 a) et 3 b) reprennent l'exemple des figures 2 a) et 2 b) avec un schéma à quatre couleurs. La figure 3 a) illustre une zone de couverture multifaisceaux homogène, chaque cellule étant représentée par un hexagone associé à une couleur de sorte que les cellules contiguës correspondent donc à des couleurs différentes. La figure 3 b) représente les faisceaux circulaires associés à chaque cellule (dont la couleur est identique à celle de la cellule associée).

Un exemple de schéma à quatre couleurs pour la couverture de l'Europe est représenté en figure 4. Dans ce cas, 80 cellules sont nécessaires pour couvrir l'Europe. Ce schéma permet d'avoir une couverture européenne vers et à partir des terminaux en utilisant un spectre de 500 MHz mais avec la réutilisation des fréquences. La couverture pour les stations terrestres est moins contraignante et peut être fournie par un sous-ensemble de faisceaux ou une couverture à part.

Ce type de schéma est applicable aussi bien en liaison montante qu'en liaison descendante. Au niveau du satellite, la création d'un faisceau se fait à partir d'un cornet rayonnant vers un réflecteur. Un réflecteur peut être associé à une couleur de sorte qu'une couverture à quatre couleurs est assurée par quatre réflecteurs.

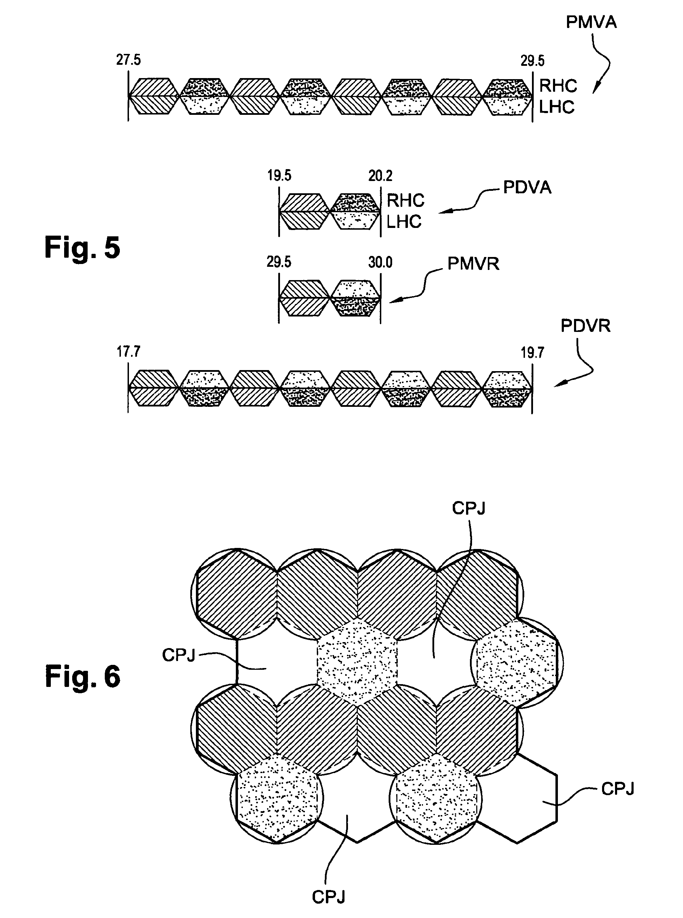

La figure 5 illustre un plan de fréquences décomposé en un plan de fréquences de liaison montante PMVA sur la voie aller, un plan de fréquences de liaison descendante PDVA sur la voie aller, un plan de fréquences de liaison montante PMVR sur la voie retour et un plan de fréquences de liaison descendante PDVR sur la voie retour. Les notations RHC et LHC désignent respectivement les sens circulaires droit et gauche de polarisation.

Le plan PMVA correspondant à la liaison montante sur la voie aller (de la station terrestre au satellite) dispose de 2 GHz de spectre disponible en fréquence de sorte que 16 canaux de 250 MHz de bande passante sont générés par une station terrestre (8 canaux pour chaque polarisation). Ces 16 canaux, après traitement par la charge utile du satellite formeront 16 faisceaux. Dans cette exemple, 16 faisceaux (et donc 16 cellules) sont générés par une station terrestre.

On notera que le schéma à quatre couleurs, pour la voie aller, associe à chaque faisceau d'un motif de quatre faisceaux adjacents une des quatre couleurs suivantes :
- une première couleur rouge correspondant à une première bande de 250 MHz (partie inférieure du spectre disponible de 500 MHz) et au sens de polarisation circulaire droit ;
- une deuxième couleur bleue correspondant à la même première bande de 250 MHz et au sens de polarisation circulaire gauche ;
- une troisième couleur jaune correspondant à une deuxième bande de 250 MHz (partie supérieure du spectre disponible de 500 MHz) et au sens de polarisation circulaire droit ;
- une quatrième couleur verte correspondant à la même deuxième bande de 250 MHz et au sens de polarisation circulaire gauche.

Sur la voie retour, les polarisations sont inversées de sorte que les couleurs rouge et jaune ont une polarisation circulaire gauche et les couleurs bleue et verte ont une polarisation circulaire droite.

Une telle configuration est cependant susceptible de poser quelques difficultés.

En effet, la moindre défaillance entraînant la perte de faisceaux a un impact direct sur les cellules associées à ces faisceaux dont la couverture n'est plus assurée. Une telle défaillance peut être par exemple due à :
- la défaillance d'une station terrestre impliquant la perte des l'ensemble des faisceaux générés à partir de la station (dans notre exemple précédent 16 faisceaux) ;
- la panne d'une antenne à bord du satellite (on perd alors généralement 25% des faisceaux provenant du satellite avec quatre antennes sur le satellite et donc 25% de la surface couverte par le satellite) ;
- le mauvais fonctionnement d'un multiplexeur ou d'un filtre qui va entraîner la perte des faisceaux directement en correspondance;
- la défaillance d'un amplificateur de puissance HPA (« High Power Amplifier » en anglais) généralement formé par un amplificateur de canal CAMP (« Chanel AMPlifier » en anglais) et un amplificateur à tube à ondes progressives TWTA (« Traveling Wave Tube Amplifier » en anglais) ou l'échec partiel du système de puissance sur le satellite : la perte peut aller de un à plusieurs faisceaux ; ainsi, il y aura un faisceau perdu si ce faisceau est généré par un amplificateur unique et que cet amplificateur (ainsi que son amplificateur redondant) est perdu ; il y aura deux faisceaux (ou plus généralement N faisceaux) perdus si l'amplificateur (et sa redondance) est utilisé par deux (plus généralement N) faisceaux (i.e. deux faisceaux par tube ou plus généralement N faisceaux par tube) ; on peut même perdre quatre faisceaux s'il s'agit de la perte du système d'alimentation mis en commun par deux amplificateurs (« Electronic Power Conditioner double » en anglais), eux-mêmes utilisés pour générer deux faisceaux chacun.

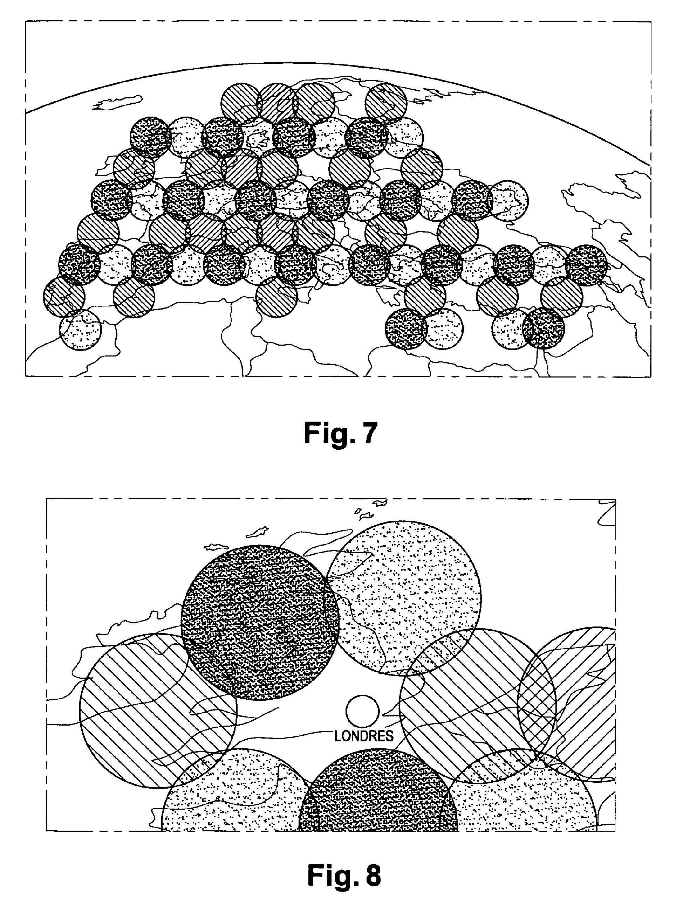

La figure 7 illustre ce phénomène en cas de défaillance d'une station terrestre servant 16 faisceaux pour la couverture de la zone Europe telle que représentée en figure 4. La perte de la station correspond à la perte d'un cinquième (perte de 16 faisceaux parmi 80) de la couverture globale, l'impact commercial d'une telle altération de la couverture étant bien entendu considérable. La figure 8 représente un agrandissement de cette même zone au niveau de la Grande Bretagne : on constate que la zone très peuplée située autour de Londres n'est plus couverte. Le document EP0812072 décrit un procédé de reconfiguration de la charge utile d'un satellite multifaisceaux en fonction de pannes dans ladite charge.

Dans ce contexte, la présente invention vise à fournir un procédé d'établissement de liaisons radiofréquences via un satellite multifaisceaux entre au moins une station terrestre et une zone de services composée d'une pluralité de cellules, ledit procédé permettant d'améliorer la couverture en cas de perte d'un ou d'une pluralité de faisceaux.

A cette fin, l'invention propose un procédé d'établissement de liaisons radiofréquences via un satellite de télécommunication à plusieurs faisceaux, dit satellite multifaisceaux, entre au moins une station terrestre et une zone de services composée d'une pluralité de zones de couverture élémentaires, dites cellules, chaque cellule comportant une pluralité de terminaux terrestres et étant associée à un faisceau auquel est attribuée une bande de fréquence, ledit procédé étant caractérisé en ce qu'en cas de perte d'un faisceau associé à une cellule, dite cellule défaillante, le faisceau associé à au moins une cellule contiguë à ladite cellule défaillante est également associé à une partie de ladite cellule défaillante.

Grâce à l'invention, on « agrandit » au moins une cellule contiguë à la cellule défaillante ; en d'autres termes, on utilise le faisceau associé à cette cellule contiguë pour couvrir une partie de la surface de la cellule défaillante en utilisant la performance du faisceau à l'extérieur de sa propre cellule.. Dans le cas où la cellule de référence dans laquelle se trouve un terminal terrestre ne peut plus fonctionner, il est en effet possible de rattacher ce terminal à un autre faisceau en « étendant la cellule associée à ce faisceau. Ainsi, une partie des terminaux terrestres appartenant initialement à la cellule défaillante se retrouve dans une cellule contiguë « agrandie dont le faisceau associé couvre non seulement la cellule contiguë mais également une partie de la cellule défaillante. Bien sûr, le gain de ce nouveau faisceau est inférieur à celui du faisceau de référence perdu, le G/T et la PIRE du satellite offerts par le nouveau faisceau étant inférieurs, mais le procédé selon l'invention offre une solution de secours en mode dégradé limitant la perte de couverture de la zone de service due au faisceau perdu. On notera que le faisceau couvre non seulement la cellule à laquelle il est initialement associé mais également la partie de la cellule défaillante sans modification de la taille dudit faisceau : c'est bien la taille de la cellule contiguë qui est agrandie via l'association partielle de son faisceau à la cellule défaillante. Ceci est rendu possible par le fait que les faisceaux, assimilés à des spots circulaires, ne s'arrêtent pas au bord de la cellule généralement hexagonale à laquelle ils sont associés. On notera également que le procédé selon l'invention s'applique tout autant sur une liaison montante à partir des cellules comportant des terminaux terrestres vers le satellite (voie retour) que sur une liaison descendante du satellite vers les cellules comportant des terminaux terrestres (voie aller). Il convient également de mentionner que le procédé selon l'invention s'applique sans modification à bord du satellite : les faisceaux restent les mêmes et on utilise avantageusement le débordement de faisceaux sur des cellules contiguës aux cellules auxquelles ils sont associés.

Le dispositif selon l'invention peut également présenter une ou plusieurs des caractéristiques ci-dessous, considérées individuellement ou selon toutes les combinaisons techniquement possibles :
Avantageusement, une pluralité de faisceaux associés chacun à une cellule contiguë à ladite cellule défaillante sont chacun associé à une partie de ladite cellule défaillante.

Selon une première variante, chacune desdites parties contribue à une surface égale de couverture.

Selon une seconde variante, au moins deux desdites parties contribuent à une surface différente de couverture.

Avantageusement, chaque faisceau présente une bande de fréquence montante ou descendante donnée et un sens de polarisation donné, les faisceaux présentant une même bande de fréquence et un même sens de polarisation étant non adjacents.

Préférentiellement, lesdites bandes de fréquence montantes ou descendantes appartiennent à l'une des bandes suivantes : Ka, Ku.

Selon un premier mode de réalisation, les terminaux terrestres de ladite cellule défaillante sont aptes à émettre et/ou recevoir des signaux dans les deux sens de polarisation de sorte que l'ensemble des faisceaux associés aux cellules contiguës à ladite cellule défaillante peuvent être associés à une partie de ladite cellule défaillante. Le sens de la polarisation d'émission et de réception est, en général, opposé.

Selon un second mode de réalisation, les terminaux terrestres de ladite cellule défaillante sont aptes à émettre et/ou recevoir des signaux dans un seul sens de polarisation de sorte que seuls les faisceaux associés aux cellules contiguës à ladite cellule défaillante et présentant le même sens de polarisation que le faisceau défaillant peuvent être associés à une partie de ladite cellule défaillante.

De manière particulièrement avantageuse, lesdites liaisons radiofréquences sont établies entre une pluralité de stations terrestres et ladite zone de service de sorte que, pour un premier faisceau affecté à une première station terrestre, l'ensemble des faisceaux adjacents au dit premier faisceau sont chacun affectés à une station terrestre différente de ladite première station terrestre.

Préférentiellement, ladite perte d'un faisceau intervient suite à l'une des défaillances suivantes :
- défaillance d'une station terrestre ;
- défaillance d'une antenne dudit satellite multifaisceaux;
- défaillance d'un composant du répéteur dudit satellite multifaisceaux.

D'autres caractéristiques et avantages de l'invention ressortiront clairement de la description qui en est donnée ci-dessous, à titre indicatif et nullement limitatif, en référence aux figures annexées, parmi lesquelles :
- la figure 1 est une représentation schématique simplifiée d'une configuration multifaisceaux;
- la figure 2a) représente un exemple de zone de couverture composée d'une pluralité d'hexagones disjoints ;
- la figure 2b) représente une approximation de la zone de couverture de la figure 2a) composée d'une pluralité de faisceaux circulaires ;
- les figures 3 a) et 3b) reprennent l'illustration des figures 2 a) et 2 b) avec un schéma à quatre couleurs;
- la figure 4 illustre un schéma à quatre couleurs pour la couverture de l'Europe ;
- la figure 5 illustre un plan de fréquence en bande Ka ;
- la figure 6 reprend l'illustration de la figure 3 b) en cas de perte des faisceaux jaunes ;
- la figure 7 reprend la figure 4 en cas de défaillance d'une station terrestre ;
- la figure 8 est un agrandissement de la figure 7 au niveau de la Grande Bretagne ;
- les figures 9 a) et b) illustrent la mise en oeuvre du procédé selon un premier mode de réalisation de l'invention;
- les figures 10 a) et b) illustrent la mise en oeuvre du procédé selon un second mode de réalisation de l'invention;
- la figure 11 illustre la mise en oeuvre du procédé selon un troisième mode de réalisation de l'invention ;
- la figure 12 illustre la mise en oeuvre du troisième mode de réalisation de l'invention dans la situation représentée en figure 8.

Dans toutes les figures, les éléments communs portent les mêmes numéros de référence.

La figure 6 reprend l'illustration de la figure 3 b) en cas de perte des faisceaux jaunes. Une telle situation peut par exemple se produire en cas de défaillance du réflecteur de l'antenne du satellite en charge de la génération des faisceaux jaunes. Ce type de panne entraîne la perte du quart des faisceaux. Comme nous l'avons déjà mentionné plus haut, les cellules perdues CPJ associées aux faisceaux jaunes sont chacune entourées de six cellules contiguës dont aucune n'est une cellule associée à un faisceau jaune (deux cellules associées à un faisceau vert, deux cellules associées à un faisceau bleu et deux cellules associées à un faisceau rouge).

Le procédé selon l'invention permet de réduire la perte de couverture engendrée par ces cellules perdues.

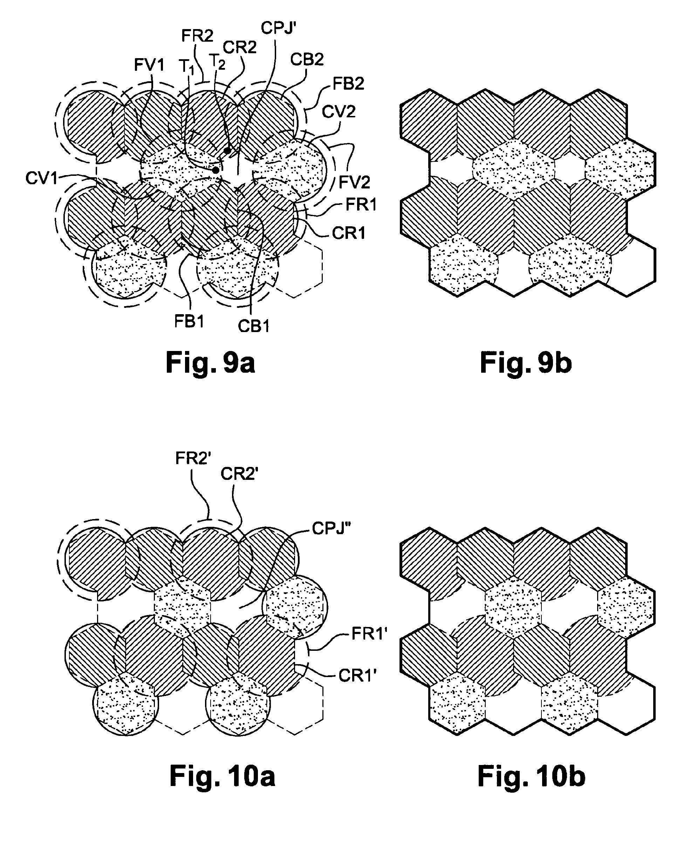

Un premier mode de réalisation du procédé selon l'invention est illustré en figures 9 a) et 9 b). Comme nous l'avons évoqué plus haut, un faisceau d'antenne associé à une cellule n'est pas capable de produire une forme hexagonale, une bonne approximation consistant à considérer un faisceau circulaire. Une cellule est déterminée comme la partie de la zone de service associée au faisceau offrant le gain le plus élevé sur cette zone parmi tous les faisceaux du satellite. Toutefois, les faisceaux ne s'arrêtent pas aux bords de la cellule : le procédé selon l'invention utilise avantageusement le débordement de chaque faisceau sur les cellules contiguës à la cellule à laquelle il est associé. Comme sur la figure 6, tous les faisceaux jaunes sont défaillants de sorte que les cellules associées aux faisceaux jaunes ne sont pas couvertes : ces cellules sont dites cellules défaillantes. Grâce au procédé selon l'invention, on agrandit les cellules contiguës aux cellules défaillantes. Les faisceaux d'une même « couleur » étant non adjacents, les cellules contiguës correspondent donc à des couleurs différentes. On entend par agrandissement d'une cellule contiguë le fait d'associer le faisceau associé à cette cellule contiguë à une partie de la surface de la cellule défaillante. Les six faisceaux (deux rouges FR1 et FR2, deux bleus FB1 et FB2 et deux verts FV1 et FV2) associés respectivement aux 6 cellules CR1, CR2, CB1, CB2, CV1 et CV2 contiguës à la cellule défaillante sont chacun associés à une partie de la surface de la cellule hexagonale de sorte la surface non couverte CPJ' est bien inférieure à la surface de la cellule CPJ défaillante telle que représentée en figure 6. Bien entendu, les faisceaux FR1, FR2, FB1, FB2, FV1 et FV2 continuent également à être associés respectivement aux cellules CR1, CR2, CB1, CB2, CV1 et CV2. On notera que la taille des faisceaux FR1, FR2, FB1, FB2, FV1 et FV2 n'augmente pas, l'agrandissement des faisceaux représenté en figure 9 a) (i.e. les deux cercles concentriques, l'un en pointillés et l'autre en trait plein, montrant respectivement le faisceau utilisé en mode de fonctionnement selon l'art antérieur et le faisceau en mode de fonctionnement suivant le procédé selon l'invention) visant seulement à illustrer le fait que ces derniers sont associés à une surface plus importante : la taille des faisceaux reste la même. De même, les bandes de fréquences allouées aux faisceaux restent les mêmes : il n'y a pas de réorganisation des bandes de fréquences mais dans la cellule défaillante les bandes de fréquences et les polarisations sont définies selon les secteurs (géographiques) et l'extension des faisceaux (i.e. les terminaux situés dans la cellule défaillante émettent et reçoivent dans la bande de fréquence associée à la nouvelle cellule agrandie dans laquelle ils se trouvent mais cela n'implique aucun changement d'infrastructure). Bien entendu, ces faisceaux ne sont pas optimisés (par construction) pour fonctionner avec la cellule défaillante en termes de figure de mérite G/T et de PIRE mais il s'agit d'une solution de secours permettant de palier une perte de la surface globale de la cellule défaillante : on comprend dés lors que le procédé selon l'invention offre une solution en mode dégradé intermédiaire entre la solution optimale avec toutes les cellules en fonctionnement et la solution avec perte de faisceaux sans recouvrement partiel de surface de service. Une autre manière de décrire l'invention consiste à considérer qu'une partie des terminaux terrestres se trouvant initialement dans la cellule défaillante sont réaffectés aux cellules contiguës à la cellule défaillante. A titre d'exemple, le terminal terrestre T1 qui appartenait initialement à la cellule défaillante appartient à la cellule CV1 : la cellule CV1 est « agrandie » (i.e. la liaison radiofréquence se fait sur le faisceau FV1) pour permettre de couvrir la zone à laquelle appartenait initialement le terminal T1. De même, le terminal terrestre T2 qui appartenait initialement à la cellule défaillante appartient à la cellule CV2 : la cellule CV2 est « agrandie » (i.e. la liaison radiofréquence se fait sur le faisceau FV2) pour permettre de couvrir la zone à laquelle appartenait initialement le terminal T2. La figure 9 b) représente la zone de service couverte grâce au procédé selon ce premier mode de réalisation de l'invention utilisant l'extension de l'ensemble des cellules contiguës à la cellule défaillante.

On notera que le mode de réalisation décrit en référence aux figures 9 a) et 9 b) part de l'hypothèse que les terminaux terrestres sont aptes à fonctionner sur les deux sens de polarisation circulaires gauche et droit (ou horizontal et vertical selon les cas). Un second mode de réalisation du procédé selon l'invention est illustré en référence aux figures 10 a) et b) dans le cas de terminaux terrestres moins performants ne fonctionnant que dans un sens de polarisation. La couleur jaune du faisceau associé à la cellule défaillante a un sens de polarisation circulaire droit. Dans ce cas, seules les cellules CR1' et CR2' associées aux faisceaux rouges FR1' et FR2' dont le sens de polarisation est également circulaire droit sont agrandies ; en d'autres termes, les faisceaux de même polarisation que le faisceau associé à la cellule défaillante sont chacun associés à une partie de la cellule défaillante de façon à obtenir une surface non couverte CPJ" réduite par rapport à la surface de la cellule défaillante CPJ (la surface CPJ" est évidemment supérieure à la surface CPJ'). La figure 10 b) représente la zone de service couverte grâce au procédé selon ce second mode de réalisation de l'invention utilisant l'extension des cellules contiguës à la cellule défaillante et présentant une polarisation de même sens que la cellule défaillante.

Le procédé selon l'invention s'applique tout autant sur une liaison montante à partir des cellules comportant des terminaux terrestres vers le satellite (voie retour) que sur une liaison descendante du satellite vers les cellules comportant des terminaux terrestres (voie aller). Le schéma à quatre couleurs est symétrique entre la voie aller et la voie retour. Une cellule est de la même couleur en réception et en transmission. Par contre, cette couleur ne correspond pas à la même fréquence en voie aller (réception du signal émis par le satellite entre 19.7 et 20.2 GHz) et en voie retour (émission en direction du satellite entre 29.5 et 30.0 GHz). De plus, la polarisation est inversée entre le signal émis et le signal reçu, ce qui permet l'utilisation de terminaux plus simples et moins coûteux, la séparation entre signal transmis et signal reçu se faisant par polarisation et ne nécessitant pas de filtrage spécifique. En reprenant le plan de fréquence de la Figure 5, on observe bien cette inversion de polarisation et la différence de fréquence, pour la même couleur entre la voie aller et la voie retour. Le procédé s'applique donc de la même façon en voie aller et en voie retour, puisque une cellule va s'interfacer avec une seule station terrestre pour la voie aller (réception par les terminaux de la cellule des signaux envoyés par la station terrestre via le satellite) et pour la voie retour (transmission des signaux par le terminal vers la station terrestre via le satellite). En cas de défaillance d'une station terrestre, ou bien en cas de défaillance d'une antenne satellite, on perd alors la capacité des cellules reliées à cette station terrestre et respectivement la capacité des cellules reliées au segment sol via cette antenne, à la fois en voie aller et en voie retour. Une défaillance d'un amplificateur satellite pourra n'affecter que la voie aller ou la voie retour, selon que cet amplificateur est utilisé pour la voie aller ou pour la voie retour.

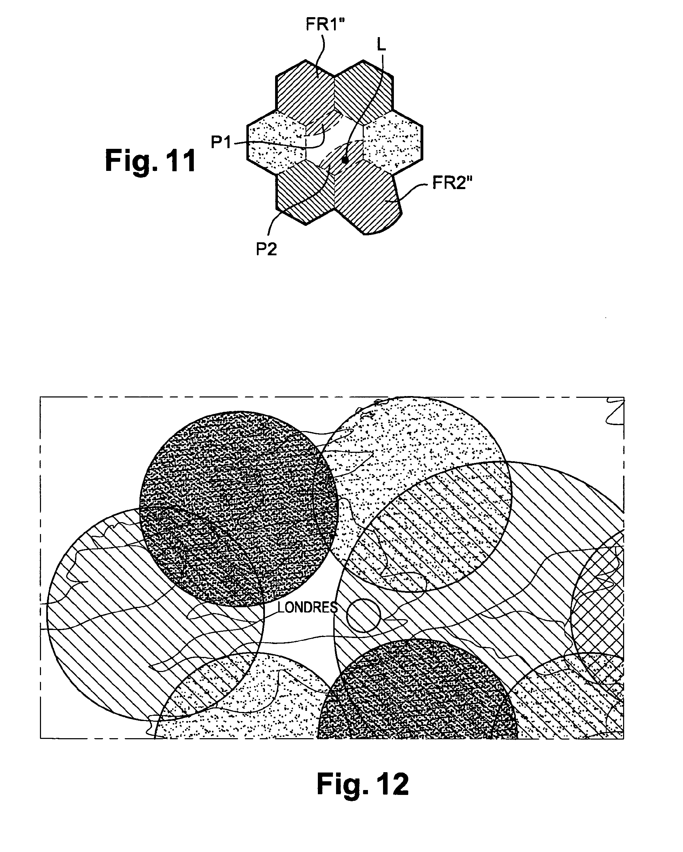

On notera que les parties de la cellule défaillante réallouées à un autre faisceau adjacent, aussi bien sur les figures 9 a) et 9 b) que sur les figures 10 a) et 10 b), ont la même surface. On peut toutefois également appliquer le procédé selon l'invention en augmentant de façon différente les surfaces de la cellule perdue en fonction des besoins en ressources qui ne sont pas nécessairement répartis de façon homogène sur la surface perdue. La figure 11 illustre ce mode de réalisation. On constate que la partie P1 associée au faisceau rouge FR1" présente une surface inférieure à la surface de la partie P2 associée au faisceau rouge FR2". Une telle mise en oeuvre du procédé selon l'invention peut s'avérer particulièrement utile lorsqu'on souhaite récupérer un fonctionnement sur une partie incluant un lieu d'intérêt L. Un exemple d'utilisation de ce mode de réalisation est illustré sur la figure 12 sur laquelle on observe un faisceau bleu associé à une partie plus importante que les autres de la cellule perdue, ladite partie incluant la ville de Londres : le procédé selon ce troisième mode de réalisation permet donc de recouvrir certaines villes importantes contrairement à ce qui était illustré en référence à la figure 8 pour laquelle la zone londonienne était perdue.

L'agrandissement des cellules implique que les stations terrestres doivent gérer une extension du nombre de terminaux terrestres avec lesquels elles doivent communiquer. Ceci est possible dans le cas d'une gestion centralisée des adresses de type MAC («Media Access Control » en anglais) ou IP (« Internet Protocol » en anglais) des terminaux. Cette gestion centralisée permet à toutes les stations terrestres, quasiment en temps réel, de savoir quels sont les terminaux qui leur sont rattachés, et de reprendre leur contrôle en cas de défaillance. Une autre solution peut consister à donner aux terminaux terrestres une adresse en mode de fonctionnement normal les reliant à leur station terrestre de référence et une adresse "de secours" (en cas de défaillance du faisceau auquel ils sont rattachés) les reliant à une station terrestre de secours, la reconfiguration devenant ainsi très rapide.

Le procédé selon l'invention trouve une application particulièrement intéressante dans le cas de la défaillance d'une station terrestre impliquant la perte de l'ensemble des faisceaux générés à partir de la station (dans l'exemple cité précédemment en référence à l'état de la technique, 16 faisceaux étaient perdus). Dans ce cas, le réseau de transmission de données par satellite est construit de sorte que pour un premier faisceau affecté à une première station terrestre, l'ensemble des faisceaux adjacents au dit premier faisceau sont chacun affectés à une station terrestre différente de cette première station terrestre. En d'autres termes, si un faisceau est « servi » par une station terrestre, les faisceaux entourant ce faisceau sont nécessairement servis par une autre station terrestre. Une telle configuration permet, en cas de défaillance d'une station terrestre, de toujours disposer des faisceaux adjacents au faisceau perdu issu de la station terrestre défaillante ; la mise en oeuvre du procédé selon l'invention est alors toujours possible puisqu'on dispose toujours des faisceaux associés aux cellules contiguës à la cellule perdue. On notera qu'une telle architecture est particulièrement originale dans la mesure où les faisceaux servis par une même station terrestre ne sont pas regroupés géographiquement mais sont au contraire volontairement éloignés de façon à pouvoir mettre en oeuvre le procédé selon l'invention.

Bien entendu, l'invention n'est pas limitée au mode de réalisation qui vient d'être décrit.

Notamment, l'invention a été plus particulièrement décrite dans le cas d'un schéma à quatre couleurs mais elle peut s'appliquer à un autre nombre de couleurs (deux par exemple).

En outre, nous avons décrit plus spécifiquement le cas de pertes de faisceaux liés à une couleur ou d'un ensemble de faisceaux servis par une même station terrestre mais le procédé selon l'invention s'applique tout autant dans le cas d'autres défaillances induisant la perte de faisceaux (mauvais fonctionnement d'un multiplexeur ou d'un filtre, défaillance d'un amplificateur de puissance HPA ou échec du système de puissance sur le satellite).

## Revendications

1. Procédé d'établissement de liaisons radiofréquences via un satellite de télécommunication à plusieurs faisceaux, dit satellite multifaisceaux, entre au moins une station terrestre et une zone de services composée d'une pluralité de zones de couverture élémentaires, dites cellules, chaque cellule comportant une pluralité de terminaux terrestres et étant associée à un faisceau auquel est attribuée une bande de fréquence, dans lequel, en cas de perte d'un faisceau associé à une cellule, dite cellule défaillante, le faisceau (FR1, FR2, FB1, FB2, FV1, FV2) associé à au moins une cellule contiguë (CR1, CR2, CB1, CB2, CV1, CV2) à ladite cellule défaillante est également associé à une partie de ladite cellule défaillante de sorte que la surface (CPJ') de ladite cellule défaillante soit réduite, lesdites liaisons radiofréquences étant établies entre une pluralité de stations terrestres et ladite zone de service de sorte que, pour un premier faisceau affecté à une première station terrestre, l'ensemble des faisceaux adjacents au dit premier faisceau sont chacun affectés à une station terrestre différente de ladite première station terrestre.

2. Procédé selon la revendication 1 **caractérisé en ce qu'**une pluralité de faisceaux (FR1, FR2, FB1, FB2, FV1, FV2) associés chacun à une cellule contiguë (CR1, CR2, CB1, CB2, CV1, CV2) à ladite cellule défaillante sont chacun associés à une partie de ladite cellule défaillante.

3. Procédé selon la revendication 2 **caractérisé en ce que** chacune desdites parties contribue à une surface de couverture.

4. Procédé selon la revendication 2 **caractérisé en ce qu'**au moins deux desdites parties (P1, P2) contribuent à une surface différente de couverture.

5. Procédé selon l'une des revendications précédentes **caractérisé en ce que** chaque faisceau (FR1, FR2, FB1, FB2, FV1, FV2) présente une bande de fréquence montante ou descendante donnée et un sens de polarisation donné, les faisceaux présentant une même bande de fréquence et un même sens de polarisation étant non adjacents.

6. Procédé selon la revendication précédente **caractérisé en ce que** lesdites bandes de fréquence montantes ou descendantes appartiennent à l'une des bandes suivantes : Ka, Ku.

7. Procédé selon l'une des revendications 5 ou 6 **caractérisé en ce que** les terminaux terrestres de ladite cellule défaillante sont aptes à émettre et/ou recevoir des signaux dans les deux sens de polarisation de sorte que l'ensemble des faisceaux (FR1, FR2, FB1, FB2, FV1, FV2) associés aux cellules contiguës (CR1, CR2, CB1, CB2, CV1, CV2) à ladite cellule défaillante peuvent être associés à une partie de ladite cellule défaillante

8. Procédé selon l'une des revendications 5 ou 6 **caractérisé en ce que** les terminaux terrestres de ladite cellule défaillante sont aptes à émettre et/ou recevoir des signaux dans un seul sens de polarisation de sorte que seuls les faisceaux (FR1', FR2') associés aux cellules contiguës (CR1', CR2') à ladite cellule défaillante et présentant le même sens de polarisation que le faisceau défaillant peuvent être associés à une partie de ladite cellule défaillante.

9. Procédé selon l'une des revendications précédentes **caractérisé en ce que** ladite perte d'un faisceau intervient suite à l'une des défaillances suivantes :
- défaillance d'une station terrestre ;
- défaillance d'une antenne dudit satellite multifaisceaux;
- défaillance d'un composant du répéteur dudit satellite multifaisceaux.

## Claims

1. A method for establishing radiofrequency links via a telecommunications satellite with several spots, designated a multispot satellite, between at least one terrestrial station and a service area composed of a plurality of elementary coverage areas, designated cells, each cell comprising a plurality of terrestrial terminals and being associated with a spot to which is allocated a frequency band, in which, in case of loss of a spot associated with a cell, designated the faulty cell, the spot (FR1, FR2, FB1, FB2, FV1, FV2) associated with at least one cell (CR1, CR2, CB1, CB2, CV1, CV2) contiguous with said faulty cell is also associated with part of said faulty cell such that the area (CPJ') of said faulty cell is reduced, said radio links being established between a plurality of terrestrial stations and said service area so that, for a first spot allocated to a first terrestrial station, all spots adjacent to said first spot are each allocated to a terrestrial station different from said first terrestrial station.

2. The method according to claim 1 **characterized in that** a plurality of spots (FR1, FR2, FB1, FB2, FV1, FV2), each associated with a cell (CR1, CR2, CB1, CB2, CV1, CV2) contiguous with said faulty cell, are each associated with part of said faulty cell.

3. The method according to claim 2 **characterized in that** each of said parts contributes to a coverage area.

4. The method according to claim 2 **characterized in that** at least two of said parts (P1, P2) contribute to a different coverage area.

5. The method according to one of the previous claims **characterized in that** each spot (FR1, FR2, FB1, FB2, FV1, FV2) presents a given ascending or descending frequency band and a given polarization direction, the spots presenting a same frequency band and a same polarization direction being non-adjacent.

6. The method according to the previous claim **characterized in that** said ascending or descending frequency bands belong to one of the following bands: Ka, Ku.

7. The method according to one of claims 5 or 6 **characterized in that** the terrestrial terminals of said faulty cell are capable of emitting and/or receiving signals in both polarization directions such that all of the spots (FR1, FR2, FB1, FB2, FV1, FV2) associated with the cells (CR1, CR2, CB1, CB2, CV1, CV2) contiguous with said faulty cell may be associated with part of said faulty cell.

8. The method according to one of claims 5 or 6 **characterized in that** the terrestrial terminals of said faulty cell are capable of emitting and/or receiving signals in one polarization direction such that only spots (FR1', FR2') associated with the cells (CR1', CR2') contiguous with said faulty cell presenting the same polarization direction as the faulty spot may be associated with part of said faulty cell.

9. The method according to one of the previous claims **characterized in that** said loss of a spot occurs as a result of one of the following failures:
- failure of a terrestrial station;
- failure of an antenna of said multispot satellite;
- failure of a component of the transponder of said multispot satellite.

## Patentansprüche

1. Verfahren zum Herstellen von Hochfrequenzverbindungen über einen Mehrstrahl-Fernmeldesatellit, einen sogenannten Mehrstrahlsatellit, zwischen mindestens einer Bodenstation und einem Dienstbereich, der aus mehreren Grundversorgungsbereichen, sogenannten Zellen, besteht, wobei jede Zelle mehrere Bodenstationen umfasst und einem Strahl zugehörig ist, dem ein Frequenzband zugewiesen ist, wobei im Falle eines Verlusts eines einer Zelle, einer sogenannten ausgefallenen Zelle, zugehörigen Strahls, der mindestens einer an die ausgefallene Zelle angrenzenden Zelle (CR1, CR2, CB1, CB2, CV1, CV2) zugehörige Strahl (FR1, FR2, FB1, FB2, FV1, FV2) auch mit einem Teil der ausgefallenen Zelle verbunden wird, derart, dass die Fläche (CPJ) der ausgefallenen Zelle vermindert wird, wobei die Hochfrequenzverbindungen derart zwischen mehreren Bodenstationen und dem Versorgungsbereich hergestellt werden, dass für einen ersten Strahl, der einer ersten Bodenstation zugeordnet ist, sämtliche dem ersten Strahl benachbarten Strahlen jeweils einer Bodenstation zugeordnet werden, die sich von der ersten Bodenstation unterscheidet.

2. Verfahren nach Anspruch 1, **dadurch gekennzeichnet, dass** mehrere Strahlen (FR1, FR2, FB1, FB2, FV1, FV2), die jeweils einer an die ausgefallene Zelle angrenzenden Zelle (CR1, CR2, CB1, CB2, CV1, CV2) zugehörig sind, jeweils mit einem Teil der ausgefallenen Zelle verbunden werden.

3. Verfahren nach Anspruch 2, **dadurch gekennzeichnet, dass** jeder der Teile zu einer Versorgungsfläche beiträgt.

4. Verfahren nach Anspruch 2, **dadurch gekennzeichnet**, das mindestens zwei der Teile (P1, P2) zu einer unterschiedlichen Versorgungsfläche beitragen.

5. Verfahren nach einem der vorhergehenden Ansprüche, **dadurch gekennzeichnet, dass** jeder Strahl (FR1, FR2, FB1, FB2, FV1, FV2) ein gegebenes Aufwärtsstrecken- oder Abwärtsstreckenfrequenzband und eine gegebene Polarisationsrichtung aufweist, wobei die Strahlen, die ein gleiches Frequenzband und eine gleiche Polarisationsrichtung aufweisen, nicht benachbart sind.

6. Verfahren nach dem vorhergehenden Anspruch, **dadurch gekennzeichnet, dass** die Aufwärtsstrecken- oder Abwärtsstreckenfrequenzbänder zu einem der folgenden Bänder gehören: Ka, Ku.

7. Verfahren nach einem der Ansprüche 5 oder 6, **dadurch gekennzeichnet, dass** die Bodenendgeräte der ausgefallenen Zelle geeignet sind, in beiden Polarisationsrichtungen Signale zu senden und/oder zu empfangen, derart, dass sämtliche Strahlen (FR1, FR2, FB1, FB2, FV1, FV2), die Zellen (CR1, CR2, CB2, CB2, CV1, CV2) zugehörig sind, die an die ausgefallene Zelle angrenzen, mit einem Teil der ausgefallenen Zelle verbunden werden können.

8. Verfahren nach einem der Ansprüche 5 oder 6, **dadurch gekennzeichnet, dass** die Bodenendgeräte der ausgefallenen Zelle geeignet sind, Signale in einer einzigen Polarisationsrichtung zu senden und/oder zu empfangen, derart, dass nur die Strahlen (FR1', FR2'), die den an die ausgefallene Zelle angrenzenden Zellen (CR1', CR2') zugehörig sind und dieselbe Polarisationsrichtung aufweisen wie der ausgefallene Strahl, mit einem Teil der ausgefallenen Zelle verbunden werden können.

9. Verfahren nach einem der vorhergehenden Ansprüche, **dadurch gekennzeichnet; dass** der Verlust eines Strahls infolge eines der folgenden Ausfälle eintritt:
- Ausfall einer Bodenstation;
- Ausfall einer Antenne des Mehrstrahlsatelliten;
- Ausfall eines Bauteils des Zwischenverstärkers des Mehrstahlsatelliten.
